(19) Europäisches Patentamt
European Patent Office
Office européen des brevets

(11) Veröffentlichungsnummer : **0 011 743**
**B1**

(12) # EUROPÄISCHE PATENTSCHRIFT

(45) Veröffentlichungstag der Patentschrift : **11.08.82**

(51) Int. Cl.[3] : **C 13 F 1/00**, C 23 F 14/02, C 08 L 33/00, C 08 L 35/08

(21) Anmeldenummer : **79104366.4**

(22) Anmeldetag : **07.11.79**

(54) **Mittel zur Verhinderung der Ausbildung von Steinkrusten beim Eindampfen von Zuckersäften, Verfahren zum Eindampfen von Zuckersäften und Verwendung des Mittels hierfür.**

(30) Priorität : **10.11.78 DE 2848779**

(43) Veröffentlichungstag der Anmeldung : **11.06.80 (Patentblatt 80/12)**

(45) Bekanntmachung des Hinweises auf die Patenterteilung : **11.08.82 Patentblatt 82/32**

(84) Benannte Vertragsstaaten : **AT BE CH DE FR GB IT LU NL SE**

(56) Entgegenhaltungen :
**US A 3 483 033**
**US A 3 832 302**

(73) Patentinhaber : **Keller & Bohacek GmbH & Co KG**
**Liliencronstrasse 64**
**D-4000 Düsseldorf-Rath (DE)**

(72) Erfinder : **Keller, Renate, Dipl.-Chem.**
**Rosenstrasse 36**
**D-4000 Düsseldorf 30 (DE)**

(74) Vertreter : **Türk, Dietmar, Dr. rer. nat. et al**
**Redies, Redies, Türk & Gille Bruckner Strasse 20**
**D-4000 Düsseldorf 13 (DE)**

**EP 0 011 743 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Mittel zur Verhinderung der Ausbildung von Steinkrusten beim Eindampfen von Zuckersäften, Verfahren zum Eindampfen von Zuckersäften und Verwendung des Mittels hierfür.

In vielen Verdampfern für das Eindampfen von Zuckersäften treten Beläge, sogenannte Steinkrusten auf, die den Wärmedurchgang so stark vermindern, daß eine Reinigung, das heißt eine Entfernung der Beläge, während der Kampagne erforderlich wird. Das betrifft die Rübenzucker- und die Rohrzucker-Industrie.

Die Steinbeläge enthalten wechselnde Mengen an Calciumcarbonat, Calciumoxalat, calciumsulfat, Calciumphosphat und Kieselsäure bzw. Silikaten neben organischen Abbaustoffen. Mit zunehmender Verdampfung steigen die sich abscheidenden Mengen Calciumoxalat und Silikat, die den Wärmedurchgang besonders stark mindern. Die Vermeidung von Belägen ist eine der wichtigsten wärmewirtschaftlichen Forderungen. Ein Belag von 1 mm Dicke setzt die Wasserverdampfung von 50 kg/($m^2$h) je nach Art des Belages auf 14-7 kg/($m^2$h) herab. Es besteht daher die Aufgabe, die Bildung von Steinbelägen in den Verdampfern im Verlauf der Kampagne und damit Produktionsstillstände zu verhüten oder so stark zu vermindern, daß am Kampagne-Ende nur geringe Inkrustierungen vorliegen, die leicht zu entfernen sind.

Der Erfindung liegt daher die Aufgabe zugrunde, die Beläge beim Eindampfen des Zuckersaftes mit Mitteln zu verhüten, die schon in kleinsten Mengen wirksam und beim Übergang in die Melasse biologisch unbedenklich sind. Überraschenderweise wurde gefunden, daß Kombinationen von verschiedenen Polyelektrolyten erheblich besser wirken als jede einzelne Komponente, d.h. es werden synergistische Effekte erzielt.

In der US-A 3 483 033 sind zur Verhütung von Steinbelägen in Verdampfern beim Eindicken des Zuckersaftes 1 bis 4 ppm hydrolysiertes Polyacrylamid zusammen mit 7 bis 28 ppm Na-Hexametaphosphat unter Mitverwendung von Äthylendiamintetraacetat und Schutzkolloiden vorgeschlagen worden. Der hohe Anteil an Hexametaphosphat ist wegen der geringen Stabilität der Verbindung gegenüber einer Hydrolyse zu Orthophosphaten ungünstig, besonders bei höheren Temperaturen, wie sie bei der Eindampfung von Zuckersaft vorliegen. Außerdem sind die zur Klarhaltung des Saftes erforderlichen Zusatzmengen erheblich größer, als bei den erfindungsgemäßen hochwirksamen Kombinationen, bei deren Einsatz keine Polyphosphate, Schutzkolloide und stöchiometrisch wirksame Komplexbildner erforderlich sind.

In den US-A-4 072 607 und 4 085 045 (siehe auch US-A-3 463 730) werden zu 60 % bis 90 % hydrolysierte Polyacrylamide mit mittleren Molekulargewichten im Bereich von etwa 50 bis 70 000 als Substanzen mit belagreduzierender Wirkung beschrieben. Ein Hinweis auf die Verwendung zur Verhinderung der in Verdampfern von Zuckerfabriken entstehenden Steinkrusten — vorwiegend Calcium-Oxalat-Beläge — wird nicht gegeben. Überraschenderweise bewirken die erfindungsgemäßen Kombinationen von andersartigen Polymeren, auch ohne die Verwendung von anionischen Polyacrylamiden, eine bedeutend verbesserte Belagverhinderung.

In der US-A-3 832 802 werden als Mittel zur Verhinderung der Belagbildung beim Eindampfen von Wasser polymere organische Verbindungen vorgeschlagen, zu denen u.a. teilweise verseifte Polyacrylamide sowie Polyacrylate gehören. Diese müssen zusammen mit wasserlöslichen organischen kationischen oberflächenaktiven Mitteln verwendet werden. Die vorliegende Erfindung betrifft jedoch das Problem der Ausbildung von Belägen die beim Eindampfen von Zuckersäften auftreten. Auch wird durch die Verwendung von mindestens 3 Polymeren der nachfolgend definierten Art ein überraschender synergistischer Effekt hinsichtlich der Verhinderung der Ausbildung von Steinkrusten beim Eindampfen von Zuckersäften erhalten.

Gegenstand der vorliegenden Erfindung ist ein Mittel zur Verhinderung der Ausbildung von Steinkrusten beim Eindampfen von Zuckersäften, das dadurch gekennzeichnet ist, daß es ein Gemisch enthält aus mindestens 3 Polymeren aus der Gruppe

a) Polymere und/oder Salze der Formel I

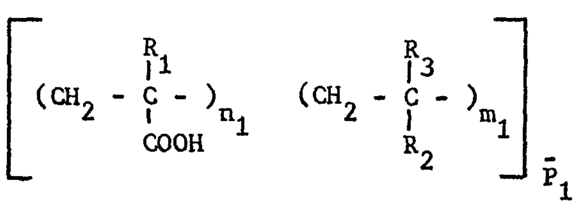

(I)

worin bedeuten :

$R_1$ : —H, —OH, —$CH_3$, —$CH_2OH$ und/oder —Cl

$R_2$ : —CHO, —$CH_2OH$ und/oder —$COOCH_2CH_2COOH$

$R_3$ : —H, —$CH_3$ und/oder —$CH_2OH$

$n_1$ : 0,5 bis 0,95

$m_1$ : 0,05 bis 0,5

$n_1 + m_1 = 1$

$\bar{P}_1$ : 6 bis 300

b) Polymere und/oder Salze der Formel I, die sich von den Polymeren gemäß a) im mittleren

Polymerisationsgrad $\bar{P}_1$ um mindestens 20 %, bezogen auf den Wert für $\bar{P}_1$ des Polymeren mit dem niedrigeren mittleren Polymerisationsgrad, unterscheiden

c) Polymere und/oder Salze und/oder niedere Alkylester der Formel II

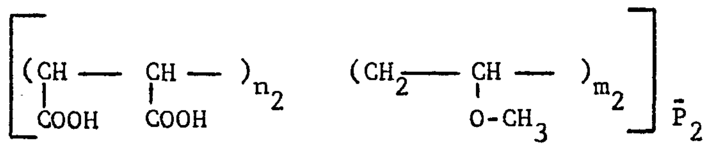 (II)

worin bedeuten

$N_2$ : 0,4 bis 1,0

$m_2$ : 0 bis 0,6

$n_2 + m_2 = 1$

$\bar{P}_2$ : 5 bis 4 000

d) Polymere und/oder Salze der Formel III

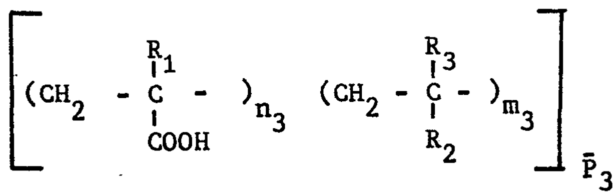 (III)

worin bedeuten :

$n_3$ : 0,95 bis 1

$m_3$ : 0,05 bis 0

$n_3 + m_3 = 1$

$\bar{P}_3$ : 6 bis 300

$R_1$, $R_2$ und $R_3$ haben die gleiche Bedeutung wie in Formel I,

e) Anionische Polyacrylamide und/oder Salze der Formel IV

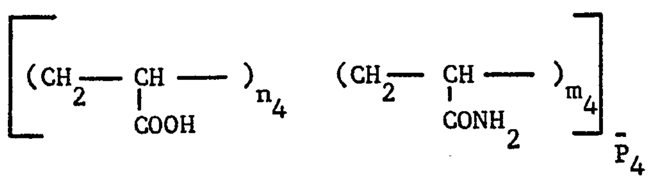 (IV)

worin bedeuten :

$n_4$ : 0,05 bis 0,95

$m_4$ : 0,95 bis 0,05

$n_4 + m_4 = 1$

$\bar{P}_4$ : 10 bis 500

wobei mindestens eines dieser Polymer in einer Menge von mindestens 10 Gew.% und mindestens 2 dieser Polymere in einer Menge von je mindestens 5 Gew.%, bezogen auf die Gesamtmenge der Polymeren, vorliegen.

Gegenstand der Erfindung ist weiterhin ein Verfahren zum Eindampfen von Zuckersäften enthaltend Zusatzstoffe zur Verhinderung der Ausbildung von Steinkrusten, das dadurch gekennzeichnet ist, daß man den Zuckersäften das vorstehend definierte Mittel zusetzt.

Wenn die Polymere als Salze vorliegen, sind Alkalimetallsalze, insbesondere Natriumsalze, bevorzugt. Grundsätzlich können auch andere Salze, z.B. Ammoniumsalze, Aminsalze oder Salze mit anderen Kation verwendet werden.

Die Mindestmenge hängt ab von der jeweiligen Wirksamkeit des gemäß der Erfindung verwendeten Gemisches und der Zusammensetzung des Zuckersaftes. In der Regel wird eine ausreichende Wirkung bereits erzielt, wenn die zugesetzte Menge entsprechend der vorstehenden Definition mindestens 1,0 ppm, vorzugsweise mindestens 2,5 ppm, beträgt. Eine ausreichende Wirkung, d.h. eine deutliche Reduzierung der Ausbildung von Steinkrusten in den Verdampfern während einer gesamten Zuckerkampagne derart, daß abhängig von der Zuckersaftzusammensetzung, nur am Ende der Kampagne oder vielleicht nur einmal während der Kampagne eine Reinigung der Anlage erforderlich ist, wird im allgemeinen schon dann erreicht, wenn dem Zuckerdünnsaft maximal 10 ppm, in vielen Fällen maximal 6 ppm und häufig so geringe Mengen wie nur maximal 4 ppm zugesetzt werden. Dies ist eine extrem niedrige Menge eines Zusatzstoffes zur Verhinderung der Ausbildung von Steinkrusten, wie sie bisher nicht für möglich gehalten wurde. Das Mittel gemäß der Erfindung wird dem einzudampfenden Zuckersaft in der Regel in mehreren Raten zugesetzt, d.h. vor und zwischen den einzelnen Verdampferstufen. Das Eindampfen von Zuckersäften erfolgt regelmäßig in Anlagen, die mehrere hintereinander

geschaltete Verdampferstufen aufweisen. Nachdem der Zuckersaft einen oder mehrere Verdampfer passiert hat, wird er naturgemäß zunehmend konzentriert. Die vorstehend angegebenen Mengen stellen die insgesamt zugesetzten Mengen der Polymeren dar. Sie beziehen sich jedoch auf das Gewicht des Zuckerdünnsaftes vor Eintritt in die erste Verdampferstufe. Wenn z.B. 3 ppm des Mittels dem Zuckerdünnsaft, bezogen auf dessen Gewicht vor Eintritt in die erste Verdampferstufe, zugesetzt werden, kann z.B. die Hälfte dieser Menge vor Eintritt in die erste Verdampferstufe, ein Viertel vor dem Eintritt in die dritte Verdampferstufe und ein Viertel vor dem Eintritt in die fünfte Verdampferstufe zugesetzt werden. Die Auswahl der Dosierstellen hängt von der Heizflächenverteilung in Bezug auf die einzelnen Verdampferstufen ab. Die Erfindung ist gleichermaßen anwendbar auf Rohrzucker und Rübenzucker.

Bevorzugt sind solche Polymere der obigen Formel I, worin die Symbole die folgenden Bedeutungen haben :

$R_1$ : —H und/oder —$CH_2OH$, insbesondere —H

$R_2$ : —CHO, —$CH_2OH$ und/oder —$COOCH_2CH_2COOH$, insbesondere —CHO und/oder —$COOCH_2CH_2COOH$

$R_3$ : —H und/oder —$CH_2OH$, insbesondere —H.

In der Formel I steht $n_1$ bevorzugt für 0,6 bis 0,95, insbesondere für 0,7 bis 0,95, und $m_1$ entsprechend für 0,05 bis 0,4 bzw. 0,05 bis 0,3. Der mittlere Polymerisationsgrad $\bar{P}_1$ ist bevorzugt 10 bis 200, insbesondere 15 bis 150.

In der Formel II haben die Symbole bevorzugt die folgende Beteutung :

$n_2$ : 0,4 bis 0,8, insbesondere 0,4 bis 0,6

$m_2$ : 0,2 bis 0,6, insbesondere 0,4 bis 0,6

$\bar{P}_2$ : 6 bis 3 200, insbesondere 100 bis 3 200

In der Formel III haben die Symbole bevorzugt die folgende Bedeutung :

$R_1$ : —H und/oder —$CH_3$, insbesondere —H

$R_2$ : —CHO, —$CH_2OH$ und/oder —$COOH_2CH_2COOH$, insbesondere —CHO und/oder —$COOCH_2CH_2COOH$

$R_3$ : —H und/oder —$CH_3$, insbesondere —H

$\bar{P}_3$ : 7 bis 200, insbesondere 50 bis 170.

In der Formel IV haben die Symbole bevorzugt die folgenden Bedeutungen :

$n_4$ : 0,2 bis 0,95, insbesondere 0,85 bis 0,95

$m_4$ : 0,05 bis 0,8 insbesondere 0,05 bis 0,15

$\bar{P}_4$ : 10 bis 100, insbesondere 20 bis 80

Der Ausdruck « niederes Alkyl » bezeichnet geradlinige oder verzweigte Alkylgruppen mit 1 bis 6, vorzugsweise 1 bis 4, besonders bevorzugt 1 oder 2 Kohlenstoffatomen. Methylester und Methylseitengruppen sind wegen der leichten Zugänglichkeit bevorzugt.

Die angegebenen Werte für n und m bedeuten also, daß das Polymer zum entsprechenden Bruchteil aus wiederkehrenden Einheiten der jeweiligen Gruppen aufgebaut ist, wobei diese wiederkehrenden Einheiten innerhalb eines Polymermoleküls nicht jeweils identisch sein müssen, sondern verschieden sein können unter Berücksichtigung der oben angegebenen Definitionen der Symbole $R_1$, $R_2$ usw. Die Sequenz der einzelnen wiederkehrenden Einheiten ist nicht festgelegt.

Die Symbole $\bar{P}$ bezeichnen jeweils den sogenannten mittleren Polymerisationsgrad.

Die Polymere der Formeln I bis IV bzw. deren Salze sind Handelsprodukte. Die angegebenen Formeln sind idealisiert. Wie dies dem Fachmann auf diesem technischen Gebiet bekannt ist, können die Polymeren in geringem Umfang auch andere wiederkehrende Einheiten oder Gruppen enthalten, die unter den Herstellungsbedingungen entstehen.

Polymere der Formel I werden bevorzugt durch oxidative Polymerisation von Acrolein für sich alleine oder zusammen mit Acrylsäure hergestellt. Gemäß DE-A-2 357 036 werden diese Polymere z.B. durch oxidative Polymerisation von Acrolein (oder Methacrolein) für sich alleine oder zusammen mit Acrylsäure (oder Methacrylsäure), wobei das Monomere bzw. Monomerengemisch langsam zu einer erwärmten, bewegten wässrigen Wasserstoffperoxidlösung zudosiert wird, hergestellt, ohne oder mit nachfolgender Neutralisation oder Umsetzung nach Cannizzaro, bzw. ohne oder mit Aldol-Addition von Formaldehyd. Bevorzugt wird die Polymerisation in Gegenwart von 0,1 bis 10,0 Gew.%, bezogen auf das Gewicht des Monomeren bzw. Monomerengemisches an Thioäthylenglycol vorgenommen.

Durch Wahl der Reaktionsbedingungen, der Ausgangsprodukte, anschließende Neutralisation ohne oder mit Umsetzung nach Cannizzaro bzw. Addition von Formaldehyd können Art und Anzahl der Gruppen, besonders der Carboxyl-, Carbonyl-, Hydroxy- und Alkylgruppengehalt sowie das mittlere Molekulargewicht gesteuert werden. In einem Polymermolekül können verschiedene wiederkehrende Einheiten der in den Klammern angegebenen Formeln enthalten sein, in denen die Symbole unterschiedliche Bedeutungen haben. In einem Polymermolekül können also Einheiten vorliegen, die jeweils unterschiedliche Struktur entsprechend der obigen Definition der Symbole der Formel I haben. Die Polymere sind im wesentlichen linear. Im Sinne der vorliegenden Erfindung ist die Art der endgruppen nicht besonders kritisch. In der Regel sind die Endgruppen Hydroxylgruppen, und diese sind deshalb gemäß der Erfindung bevorzugt. Im übrigen wird hinsichtlich der Struktur dieser Verbindungen auf das Merkblatt « POC » mit der Code-Nummer CH 215-0-2-678 Vol der Firma Degussa, Frankfurt, Bundesrepublik Deutschland, veriwesen.

Die Gruppe —CHO liegt aufgrund des Hydrolysegleichgewichts mit Wasser auch in hydratisierter Form vor. Die Gruppe mit der Formel —$COOCH_2CH_2COOH$ kann sich wahrscheinlich bei der Herstellung der Polymere dadurch bilden, daß ein Molekül Acrylsäure mit einer in der Polymerkette vorliegenden Carboxylgruppe reagiert. Die —$CH_2OH$-Gruppe im Symbol $R_2$ bildet sich durch Umsetzung der Aldehydgruppe mit NaOH nach Cannizzaro.

Das Symbol $\bar{P}_1$ steht vorzugsweise für mindestens 10, besonders bevorzugt für mindestens 15 und für vorzugsweise höchstens 200, besonders bevorzugt höchstens 150. Entsprechend diesen Werten für $\bar{P}_1$ liegen die mittleren Molekulargewichte der Polymere der Formel I im Bereich von etwa 400 bis 24 000, vorzugsweise von etwa 650 bis 16 000 und besonders bevorzugt von etwa 1 000 bis 10 000. Hierbei handelt es sich jedoch nur um angenäherte Werte, da die molekulargewichte nicht nur von der Zahl $\bar{P}_1$ der wiederkehrenden Einheiten, sondern auch von der Art der Substituenten abhängen.

Polymere der Formel II können z.B. durch Polymerisation von Maleinsäureanhydrid für sich allein oder zusammen mit Vinylmethyläther in einem inerten organischen Lösungsmittel unter Erwärmung und Einwirkung eines Polymerisationskatalysators mit anschließender Hydrolyse oder Veresterung hergestellt werden.

Polymere der Formel III sind beispielsweise durch Polymerisation von Acrylsäure bzw. Methacrylsäure in wässriger Lösung mit Hilfe eines freie Radikale bildenden Katalysators zugänglich, aber auch durch Verseifung von Polyacrylsäurechlorid, Polyacrylnitril oder Polyacrylestern bzw. durch die entsprechenden Polymethacrylverbindungen. Im übrigen gelten die Ausführungen zu Formel I. Anionische Polyacrylamide der Formel IV können durch Polymerisation von Acrylamid mit anschließender Hydrolyse einiger Amidgruppen oder durch gleichzeitige Polymerisation und Hydrolyse von Acrylamid oder auf anderen Wegen hergestellt werden, einschließlich Copolymerisation von Acrylsäure und Acrylamid oder Hydrolyse von Polyacrylnitril usw.

Eine bevorzugte Ausführungform der Erfindung besteht darin, daß in dem Mittel gemäß der Erfindung Polymere der Formel I mit verschiedenen mittleren Polymerisationsgraden, ausgedrückt als Wert für $\bar{P}_1$ vorliegen, wobei sich mindestens 2 Polymere im mittleren Polymerisationsgrad $\bar{P}_1$ um mindestens 20 %, bezogen auf das polymer mit dem niedrigeren $\bar{P}_1$, unterscheiden. Man kann dies auch so ausdrücken, daß Polymere der Formel I mit verschiedenen Molekulargewichtsbereichen vorliegen.

Wenn also das niedrigste vorliegende polymer nach Formel I einen mittleren Polymerisationsgrad $\bar{P}_1 = 10$ aufweist, (d.h. ein mittleres Molekulargewicht in der Größenordnung von etwa 800), muß ein anderes Polymer nach Formel I einen mittleren Polymerisationsgrad von mindestens etwa $\bar{P}_1 = 12$ (d.h. ein mittleres Molekulargewicht in der Größenordnung von etwa 1 000) aufweisen. Ein drittes vorliegendes Polymer der Formel I kann sich ebenfalls nur im mittleren Polymerisationsgrad wiederum um mindestens 20 %, bezogen auf den mittleren Polymerisationsgrad der Komponente mit dem nächst niedrigeren Molekulargewicht unterscheiden, oder aber durch die chemische Konstitution, oder durch den mittleren Polymerisationsgrad und chemische Konstitution. Bevorzugt unterscheiden sich die verschiedenen Polymere nach Formel I hinsichtlich des mittleren Polymerisationsgrades $\bar{P}_1$ um mindestens 50 %, besonders bevorzugt mindestens 90 %.

Gemäß der Erfindung wurde nämlich gefunden, daß man einen starken synergistischen Effekt hinsichtlich der Verhinderung der Ausbildung von Steinkrusten beim Eindampfen von Zuckersäften erhält, wenn man mindestens 3 verschiedene Polymere der oben definierten Art gleichzeitig einsetzt.

Bevorzugt enthält das Mittel gemäß der Erfindung mindestens 2 Polymere der Formel I, deren mittlere Polymerisationsgrade sich wie oben definiert unterscheiden, und mindestens ein weiteres Polymer aus der Gruppe der Polymere c) bis e). Es kann auch mindestens 3 unterschiedliche Polymere der Formel I und gegebenenfalls ein oder mehrere Polymere c), d) und/oder e) enthalten.

Der Anteil an Polymeren der Formel I bezogen auf die Gesamtmenge der im Mittel enthaltenen Polymeren gemäß der Erfindung liegt bevorzugt mindestens bei 40, besonders bevorzugt mindestens bei 60 und noch stärker bevorzugt bei mindestens 80 Gew.%. Ganz ausgezeichnete Ergebnisse werden auch erhalten, wenn das Mittel gemäß der Erfindung nur aus verschiedenen Polymeren der Formel I besteht.

Wenn das Mittel gemäß der Erfindung neben Polymeren der Formel I noch andere Polymere enthält, sind dies bevorzugt die Polymeren der Formeln II und/oder III.

Die Zahl der verschiedenen Polymere ist nach oben theoretisch nicht beschränkt. In der Praxis ist es naturgemäß nicht sinnvoll, eine extrem große Zahl verschiedener Polymere miteinander zu mischen, um das Mittel gemäß der Erfindung zu erhalten. In der Regel ist es nicht sinnvoll mehr als 8, bevorzugt mehr als 6, besonders bevorzugt mehr als 4 verschiedene Polymere miteinander zu vermischen.

Mindestens 2 der Polymere gemäß a) bis e) liegen bevorzugt in einer Menge von je mindestens etwa 10 Gew.% vor.

Das Mittel gemäß der Erfindung wird vorzugsweise in Form der Alkalimetallsalze verwendet, so daß in wässriger Lösung ein pH-Wert zwischen etwa 6 und etwa 8 vorliegt.

Wenn man das Mittel gemäß der Erfindung den Zuckersäften zusetzt, wird die Ausfällung von Belagbildnern, vorzugsweise auf Basis von Calcium, verhindert, so daß während der gesamten Zuckerkampagne nahezu keine Beläge auf den Oberflächen der Verdampferrohre auf der Produktionsseite entstehen und ein Unterbrechen der Produktion während einer Kampagne vermieden werden kann.

Bei Verwendung des Mittels gemäß der Erfindung ist eine laufende Kontrolle der belagverhindernden Wirkung der Wirkstoffe von praktischer Bedeutung.

Dies kann beispielsweise so durchgeführt werden, daß man den analytisch bestimmten $Ca^{2+}$-Gehalt des Zuckersaftes am Ende der Verdampfstation von dem $Ca^{2+}$-Gehalt subtrahiert, der sich errechnet aus dem $Ca^{2+}$-Gehalt des Zuckerdünnsaftes vor Eintritt in die Verdampfstation multipliziert mit dem Eindampffaktor der Verdampfstation, unter dem der Quotient aus dem Durchsatz des Zuckerdünnsaftes und dem Durchsatz des Zuckersaftes am Ende der Verdampfstation verstanden wird. Er kann z.B. analytisch über die Zunahme des $Cl^-$-Gehaltes oder über die Zunahme des Zuckergehaltes im Zuckersaft beim Eindampfen bestimmt werden. Ist die Differenz zwischen dem analytisch ermittelten und errechneten $Ca^{2+}$-Gehalt des Zuckersaftes am Ende der Verdampfstation gleich Null, kann sich kein Belag aus Calciumverbindungen gebildet haben.

Die für die Calciumhärtestabilisierung beim Eindampfen einsetzbaren Polyelektrolyte unterliegen nicht der Hydrolyse wie Polyphosphate, die die Bildung von Calciumphosphatbelägen während des etwa zweistündigen Verdampfungsprozesses bewirken können.

## Beispiele 1-10

Die Erfahrung hat gezeigt, daß die belagbildende Wirkung der während des Eindampfprozesses entstehenden Oxalationen im Labor dadurch simuliert werden kann, daß man eine der Ca-Härte des Zuckerdünnsaftes etwa äquivalente Natriumoxalatmenge bei 95 °C zum Zuckerdünnsaft hinzugibt und nach 30 Minuten den Tyndall-Effekt der entstehenden Trübung mit einem Tyndallometer, z.B. mit einem Spektrocolorimeter Typ E 1009 der Firma METROHM bei hoher Empfindlichkeitseinstellung mißt.

Bei zusätzlicher Anwesenheit von weit unterstöchiometrischen Mengen der beanspruchten Polymergemische im Zuckerdünnsaft werden bei gleicher Arbeitsweise deutlich niedrigere Tyndallwerte gemessen ; diese Verringerung der Lichtstreuung dient als Maß für die belagverhindernde Wirkung der Polymerzusätze.

Durch die folgenden Beispiele wird die hohe Wirksamkeit des Mittels gemäß der Erfindung gezeigt. Es bedeuten in der Tabelle 1 :

A : 1. Komponente
B : 2. Komponente } im verwendeten Mittel
C : 3. Komponente

$c_{Ox}$ : Gehalt an Natriumoxalat, angegeben in einer äquivalenten Ca-Härte. (°dH) (1° dH = 7.15 mg/l $Ca^{2+}$ = 0,356 6 m val/l)

Ty ($c_{Ox}$) : Der am Tyndallometer abgelesene Meßwert für die 90°-Lichtstreuung der Trübung, die sich nach 30-minütiger Einwirkung der angegebenen Menge Natriumoxalat $c_{Ox}$ bei 95 °C im Zuckerdünnsaft gebildet hat. (Skalenteile).

Komponenten der Formel : Formeln I bis IV, welche die Komponenten A, B und C beschreiben und worin $R_1$ für —H, $R_2$ für —CHO und/oder —$COOCH_2CH_2COOH$, $R_3$ für —H stehen.

$n_y$ : Anteile des mit $n_y$ in den Formeln I bis IV indizierten Molekülteils in den Komponenten A, B und C. y : 1, 2, 3 und 4 entsprechend den angegebenen Formeln I, II, III und IV.

$\bar{P}_y$ : Mittlerer Polymerisationsgrad der Komponenten A, B und C. y : 1, 2, 3 und 4, entsprechend den angegebenen Formeln I, II, III und IV.

$T_y$ ($C_{A,B,C}$,$c_{Ox}$) : Der am Tyndallometer abgelesene Meßwert für die 90°-Lichtstreuung der Trübung, die sich nach 30-minütiger Einwirkung eines Gehaltes von 0,88 ppm Komponente A, B oder C und der angegebenen Menge Natriumoxalat $c_{Ox}$ bei 95 °C in Zuckerdünnsaft gebildet hat. (Skalenteile).

Anteile in der Mischung

Z : Anteile der Komponenten A, B und C in Gew.%.

$T_y$($c_Z$,$c_{Ox}$) : Der am Tyndallometer abgelesene Meßwert für die 90°-Lichtstreuung der Trübung, die sich nach 30-minütiger Einwirkung eines Gehaltes von 0,88 ppm der angegebenen Mischung aus den Komponenten A, B und C und der angegebenen Menge Natriumoxalat $c_{Ox}$ bei 95 °C im Zuckerdünnsaft gebildet hat. (Skalenteile).

Die Empfindlichkeitseinstellung des verwendeten Tyndallometers war bei allen aufgeführten Trübungsmessungen gleich. Die Ca-Härten der zu Versuchen verwendeten Zuckerdünnsäfte lagen im Bereich von 7-15°dH. (7-15°dH = 50-107.2 mg/l $Ca^{2+}$ = 2.5-5.4 mval/l). Besonders die Zahlenwerte für $n_y$ und die für die mittleren Polymerisationsgrade sind im Rahmen der Genauigkeit zu sehen, die nach dem heutigen Stand der Technik erzielbar sind.

Die in der Tabelle in der letzten Zeile angegebenen Werte für die Mischungen gemäß der Erfindung liegen ganz beträchtlich unter den Werten für die einzelnen Komponenten und zeigen die ganz außerordentlich ausgeprägte und überraschende synergistische Wirkung. Bei Verwendung der Mischungen gemäß der Erfindung wird eine Trübung praktisch vollständig vermieden, während bei Zusatz der Einzelkomponenten kaum ein Effekt eintritt. Es sei nochmals darauf hingewiesen, daß — wie sich aus den Definitonen vor der Tabelle ergibt — die Mischungen gemäß der Erfindung in der gleichen Menge von 0,88 ppm zugesetzt wurden, wie jeweils die einzelnen Komponenten.

TABELLE 1

| Beispiel | | 1 | 2 | 3 | 4 | 5 | 6 | 7 | 8 | 9 | 10 |
|---|---|---|---|---|---|---|---|---|---|---|---|
| $c_{Ox}$ | | 10 | 10 | 20 | 10 | 10 | 10 | 10 | 10 | 10 | 10 |
| Ty ($c_{Ox}$) | | 52 | 52 | 88 | 54 | 55 | 52 | 78 | 50 | 51 | 52 |
| Komponenten | A | I | I | I | I | I | I | I | I | I | II |
| der | B | I | I | I | I | I | I | II | II | III | III |
| Formel | C | I | II | II | III | III | IV | III | IV | IV | IV |
| | A | 0,76 | 0,76 | 0,76 | 0,76 | 0,76 | 0,76 | 0,82 | 0,82 | 0,82 | 0,5 |
| $n_y$ | B | 0,82 | 0,82 | 0,82 | 0,82 | 0,82 | 0,82 | 0,5 | 0,5 | 1 | 1 |
| | C | 0,88 | 0,5 | 0,5 | 1 | 1 | 0,88 | 1 | 0,88 | 0,9 | 0,88 |
| | A | 20 | 20 | 20 | 20 | 20 | 20 | 60 | 60 | 60 | 170 |
| $\bar{P}_y$ | B | 60 | 60 | 60 | 60 | 60 | 60 | 3 200 | 85 | 70 | 70 |
| | C | 120 | 170 | 170 | 160 | 70 | 65 | 70 | 65 | 22 | 65 |
| $T_y$ | A | 12 | 10 | 42 | 10 | 10 | 11 | 8 | 11 | 10 | 12 |
| ($c_{A,B,C}$, $c_{Ox}$) | B | 8 | 9 | 29 | 10 | 10 | 10 | 10 | 12 | 10 | 11 |
| | C | 8 | 11 | 13 | 14 | 10 | 31 | 9 | 32 | 30 | 30 |
| Anteile in | A | 20 | 20 | 20 | 30 | 30 | 20 | 20 | 34 | 60 | 34 |
| der Mischung | B | 40 | 40 | 40 | 35 | 20 | 50 | 20 | 33 | 20 | 33 |
| Z | C | 40 | 40 | 40 | 35 | 50 | 30 | 60 | 33 | 20 | 33 |
| $T_y(c_Z, c_{Ox})$ | | 1,0 | < 0,5 | < 0,5 | < 0,5 | 0,5 | 0,5 | < 0,5 | 2,0 | 1,5 | 0,5 |

Beispiel 11

Bei 30-minütiger Einwirkung verschiedener Mengen einer handelsüblichen Wirkstoffkombination nach US-A-3 483 033, der Belagverhinderer Fabcon 1-12 der Firma Fabcon International Inc., San Francisco, USA, und einer Natriumoxalatmenge, der 10 °dH (10 °dH = 71.5 mg/l $Ca^{2+}$ = 3.6 mval/l) Ca-Härte äquivalent ist, auf Zuckerdünnsaft mit einem pH-Wert von 9,3 und einer Ca-Härte von 6,5 °dH (6,5 °dH = 46.5 mg/l $Ca^{2+}$ = 2.3 mval/l) bei 95 °C ergaben sich folgende Meßwerte für die 90°-Lichtstreuung. Sie sind im Vergleich zu denen aufgeführt, die bei Anwendung entsprechender Mengen einer Polymermischung nach Beispiel 4 erhalten werden. Die Angaben der Mengen der Zusätze erfolgt in ppm Wirksubstanz; die der Tyndallwerte in Skalenteilen.

TABELLE 2

| ppm | Kombination nach US-PS 3 483 033 | Kombination nach Beispiel 4 |
|---|---|---|
| 0 | 68 | 68 |
| 0,22 | 51 | 23 |
| 0,44 | 45 | 14 |
| 0,88 | 35 | 4,5 |
| 1,75 | 35 | < 0,5 |
| 3,50 | 7 | < 0,5 |

Die erhebliche Wirkungssteigerung, die sich mit der neuen Kombination ergibt, ist klar ersichtlich,

Anwendungsbeispiel 1

In einer rübenverarbeitenden Zuckerfabrik wurden während der etwa 3-monatigen Kampagne eine Mischung von Polymeren nach Beispiel 4 mit insgesamt 3,5 ppm Wirksubstanz, bezogen auf das Gewicht des Zuckerdünnsaftes vor Eintritt in die Verdampfstation, zum Zuckersaft dosiert.

Der Zuckerdünnsaft wies im Durchschnitt etwa einen pH-Wert von 9,0 und eine Ca-Härte von 5-10 °dH (5-10 °dH = 35.7-71.5 mg/l $Ca^{2+}$ = 1.8-3.6 m val/l) auf. Die Polymermischung wurde in Form einer 35 %igen mit Natronlauge neutralisierten wässrigen Lösung eingesetzt, wobei 50 % der Dosiermenge vor der ersten Stufe und je 25 % vor der vorletzten und letzten Stufe der Verdampfstation mit Hilfe von Dosierpumpen in den Zuckersaft eingespeist wurden.

Auf den Verdampferrohren bildete sich im Gegensatz zu vergangenen Kampagnen produktionsseitig im Verlauf der gesamten Kampagne kaum Belag. Somit war ein erheblich verbesserter Wärmedurchgang vom Heizdampf zum Zuckersaft gegeben, der sich technisch durch geringere Gegendrücke des Heizdampfes bei gleicher Heizleistung bemerkbar macht. Die sonst notwendigen Reinigungen der Verdampfer während der Kampagne brauchten im gesamten Zeitraum nicht durchgeführt zu werden. Dies ist ein technischer Effket, wie er bisher in der Zuckerindustrie nicht für möblich gehalten wurde. Er beweist die ganz überragende Wirksamkeit des Mittels gemäß der Erfindung.

**Ansprüche**

1. Mittel zur Verhinderung der Ausbildung von Steinkrusten beim Eindampfen von Zuckersäften, dadurch gekennzeichnet, daß es ein Gemisch enthält aus mindestens 3 Polymeren aus der Gruppe

a) Polymere und/oder Salze der Formel I

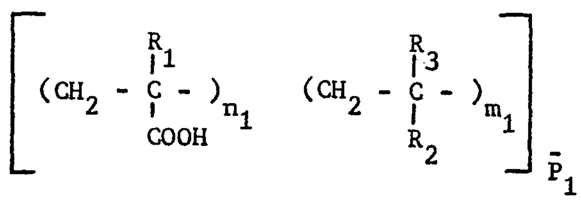

(I)

worin bedeuten :

$R_1$ : —H, —OH, —$CH_3$, —$CH_2OH$ und/oder —Cl
$R_2$ : —CHO, —$CH_2OH$ und/oder —$COOCH_2CH_2COOH$
$R_3$ : —H, —$CH_3$ und/oder —$CH_2OH$
$n_1$ : 0,5 bis 0,95
$m_1$ : 0,05 bis 0,5
$n_1 + m_1 = 1$
$\bar{P}_1$ : 6 bis 300

b) Polymere und/oder Salze der Formel I, die sich von den Polymeren gemäß a) im mittleren Polymerisationsgrad $\bar{P}_1$ um mindestens 20 %, bezogen auf den Wert für $\bar{P}_1$ des polymeren mit dem niedrigeren mittleren Polymerisationsgrad, unterscheiden

c) Polymere und/oder Salze und/oder niedere Alkylester der Formel II

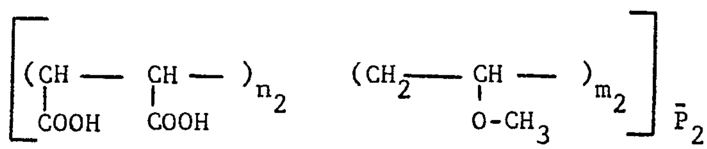

(II)

worin bedeuten

$n_2$ : 0,4 bis 1,0
$m_2$ : 0 bis 0,6
$n_2 + m_2 = 1$
$\bar{P}_2$ : 5 bis 4 000

d) Polymere und/oder Salze der Formel III

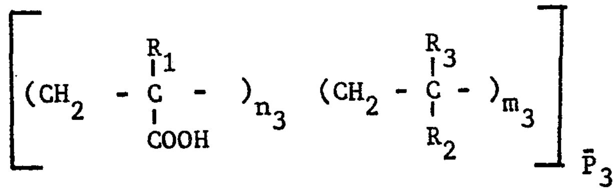

(III)

worin bedeuten :

$n_3$ : 0,95 bis 1

$m_3$ : 0,05 bis 0

$n_3 + m_3 = 1$

$\bar{P}_3$ : 6 bis 300

$R_1$, $R_2$ und $R_3$ haben die gleiche Bedeutung wie in Formel I,

e) Anionische Polyacrylamide und/oder Salze der Formel IV

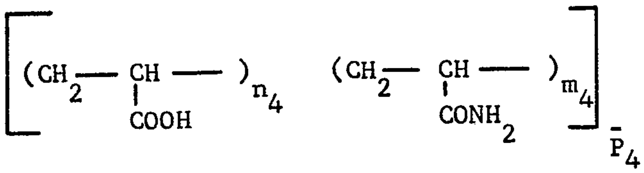

(IV)

worin bedeuten :

$n_4$ : 0,05 bis 0,95

$m_4$ : 0,95 bis 0,05

$n_4 + m_4 = 1$

$\bar{p}_4$ : 10 bis 500

wobei mindestens eines dieser Polymere in einer Menge von mindestens 10 Gew.% und mindestens 2 dieser Polymere in einer Menge von je mindestens 5 Gew.%, bezogen auf die Gesamtmenge der Polymeren, vorliegen.

2. Mittel nach Anspruch 1, dadurch gekennzeichnet, daß in der Formel I die nachfolgend genannten Symbole die folgenden Bedeutungen haben :

$R_1$ : —H und/oder —$CH_2OH$

$R_2$ : —CHO, —$CH_2OH$ und/oder —$COOCH_2CH_2COOH$

$R_3$ : —H und/oder —$CH_2OH$

3. Mittel nach Anspruch 2, dadurch gekennzeichnet, daß in der Formel I die nachfolgend genannten Symbole die folgenden Bedeutungen haben :

$R_1$ : —H

$R_2$ : —CHO und/oder —$COOCH_2CH_2COOH$

$R_3$ : —H

4. Mittel nach einem der Ansprüche 1 bis 3, dadurch gekennzeichnet, daß in der Formel I die nachfolgend genannten Symbole die folgenden Bedeutungen haben :

$n_1$ : 0,6 bis 0,95

$m_1$ : 0,05 bis 0,4

5. Mittel nach Anspruch 4, dadurch gekennzeichnet, daß in der Formel I die Symbole die folgenden Bedeutungen haben :

$N_1$ : 0,7 bis 0,95

$m_1$ : 0,05 bis 0,3

6. Mittel nach einem oder mehreren der Ansprüche 1 bis 5, dadurch gekennzeichnet, daß das Symbol $\bar{P}_1$ für 10 bis 200 steht.

7. Mittel nach Anspruch 6, dadurch gekennzeichnet, daß das Symbol $\bar{P}_1$ für 15 bis 150 steht.

8. Mittel nach einem oder mehreren der Ansprüche 1 bis 6, dadurch gekennzeichnet, daß das Symbol $\bar{O}_2$ für 6 bis 3 200, insbesondere 100 bis 3 200 steht.

9. Mittel nach einem oder mehreren der Ansprüche 1 bis 8, dadurch gekennzeichnet, daß das Symbol $\bar{P}_3$ für 7 bis 200, insbesondere 10 bis 200 steht.

10. Mittel nach einem oder mehreren der Ansprüche 1 bis 9, dadurch gekennzeichnet, daß das Symbol $\bar{P}_4$ für 10 bis 100, bevorzugt 20 bis 80 steht.

11. Mittel nach einem oder mehreren der Ansprüche 1 bis 10, dadurch gekennzeichnet, daß es mindestens 2 Polymere der Formel I, deren Polymerisationsgrade sich um mindestens 20 %, bezogen auf den mittleren Polymerisationsgrade $\bar{P}_1$ des Polymeren mit dem niedrigeren Polymerisationsgrad unterscheiden, und mindestens ein weiteres Polymer aus der Gruppe b) bis e) enthält.

12. Mittel nach Anspruch 11, dadurch gekennzeichnet, daß es mindestens 3 verschiedene Polymere der Formel I enthält, deren mittlere Polymerisationsgrade $\bar{P}_1$ sich um mindestens 20 %, bezogen auf den Wert für $\bar{P}_1$ des Polymeren mit dem jeweils niedrigeren Molekulargewicht unterscheiden.

13. Mittel nach einem oder mehreren der Ansprüche 1 bis 12, dadurch gekennzeichnet, daß das oder die Polymeren der Formel I in einer Menge von mindestens 40, bevorzugt mindestens 60, besonders bevorzugt mindestens 80 Gew.%, bezogen auf die Gesamtmenge der Polymeren vorliegen.

14. Mittel nach einem oder mehreren der Ansprüche 1 bis 13, dadurch gekennzeichnet, daß es neben Polymeren der Formel I Polymere der Formel II enthält.

15. Mittel nach einem oder mehreren der Ansprüche 1 bis 14, dadurch gekennzeichnet, daß es Polymere der Formel IV enthält.

16. Verfahren zum Eindampfen von Zuckersäften enthaltend Zusatzstoffe zur Verhinderung der Ausbildung von Steinkrusten, dadurch gekennzeichnet, daß man den Zuckersäften das Mittel gemäß Ansprüchen 1 bis 15 zusetzt.

17. Verwendung des Mittels nach Ansprüchen 1 bis 15 zur Verhinderung der Ausbildung von Steinkrusten beim Eindampfen von Zuckersäften.

**Claims**

1. An agent for preventing the formation of hard crusts in the concentration of sugar juices by evaporation, characterised in that it contains a mixture of a least 3 polymers from the group comprising

a) polymers and/or salts corresponding to the following formula

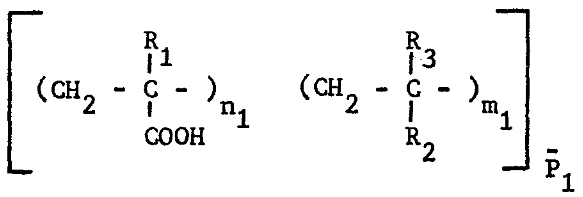

(I)

in which

$R_1$ represents —H, —OH, —$CH_3$, —$CH_2OH$ and/or —Cl,

$R_2$ represents —CHO, —$CH_2OH$ and/or —$COOCH_2CH_2COOH$,

$R_3$ represents —H, —$CH_3$ and/or —$CH_2OH$,

$n_1$ has a value of from 0.5 to 0.95,

$m_1$ has a value of from 0.05 to 0.5,

$n_1 + m_1$ together have a value of 1,

$\bar{P}_1$ has a value of from 6 to 300 ;

b) polymers and/or salts corresponding to formula (I) which differ from the polymers according to a) in their average degree of polymerisation $\bar{P}_1$ by at least 20 %, based on the value for $\bar{P}_1$ of the polymer having the lower average degree of polymerisation ;

c) polymers and/or salts and/or lower alkyl esters corresponding to the following formula

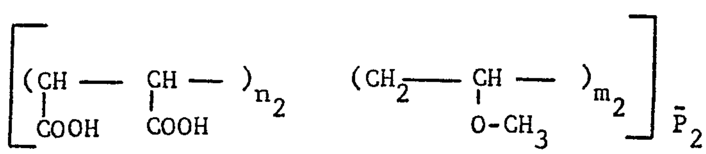

(II)

in which

$n_2$ has a value of from 0.4 to 1.0,

$m_2$ has a value of from 0 to 0.6,

$n_2 + m_2$ together have a value of 1,

$\bar{P}_2$ has a value of from 5 to 4 000 ;

d) polymers and/or salts corresponding to the following formula

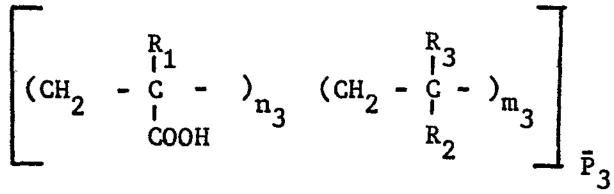

(III)

in which

$n_3$ has a value of from 0.95 to 1,

$m_3$ has a value of from 0.05 to 0,
$n_3 + m_3$ together have a value of 1,
$\bar{P}_3$ has a value of from 6 to 300,
$R_1$, $R_2$ and $R_3$ have the same meaning as in formula (I) ;

e) anionic polyacrylamides and/or salts corresponding to the following formula

$$\left[ (CH_2\!-\!\underset{\displaystyle COOH}{\underset{|}{CH}}\!-\!)_{n_4} \quad (CH_2\!-\!\underset{\displaystyle CONH_2}{\underset{|}{CH}}\!-\!)_{m_4} \right]_{\bar{P}_4} \qquad (IV)$$

in which
$n_4$ has a value of from 0.05 to 0.95,
$m_4$ has a value of from 0.95 to 0.05,
$n_4 + m_4$ together have a value of 1,
$\bar{P}_4$ has a value of from 10 to 500,
at least one of these polymers being present in a quantity of at least 10 % by weight and at least two of these polymers each being present in a quantity of at least 5 % by weight, based on the total quantity of polymers.

2. An agent as claimed in Claim 1, characterised in that, in formula (I), the symbols mentioned below have the following meanings :
$R_1$ represents —H and/or —$CH_2OH$,
$R_2$ represents —CHO, —$CH_2OH$ and/or —$COOCH_2CH_2COOH$,
$R_3$ represents —H and/or —$CH_2OH$.

3. An agent as claimed in Claim 2, characterised in that, in formula (I), the symbols mentioned below have the following meanings :
$R_1$ represents —H,
$R_2$ represents —CHO and/or —$COOCH_2CH_2COOH$,
$R_3$ represents —H.

4. An agent as claimed in any of Claims 1 to 3, characterised in that, in formula (I), the symbols mentioned below have the following meanings :
$n_1$ has a value of from 0.6 to 0.95,
$m_1$ has a value of from 0.05 to 0.4.

5. An agent as claimed in Claim 4, characterised in that, in formula (I), the symbols have the following meanings :
$n_1$ has a value of from 0.7 to 0.95,
$m_1$ has a value of from 0.05 to 0.3.

6. An agent as claimed in one or more of Claims 1 to 5, characterised in that the symbol $\bar{P}_1$ has a value of from 10 to 200.

7. An agent as claimed in Claim 6, characterised in that the symbol $\bar{P}_1$ has a value of from 15 to 150.

8. An agent as claimed in one or more of Claims 1 to 6, characterised in that the symbol $\bar{P}_2$ has a value of from 6 to 3 200 and more particularly from 100 to 3 200.

9. An agent as claimed in one or more of Claims 1 to 8, characterised in that the symbol $\bar{P}_3$ has a value of from 7 to 200 and more particularly from 10 to 200.

10. An agent as claimed in one or more of Claims 1 to 9, characterised in that the symbol $\bar{P}_4$ has a value of from 10 to 100 and more particularly from 20 to 80.

11. An agent as claimed in one or more of Claims 1 to 10, characterised in that it contains at least two polymers corresponding to formula (I) of which the degrees of polymerisation differ by at least 20 %, based on the average degree of polymerisation $\bar{P}_1$ of the polymer having the lower degree of polymerisation, and at least one other polymer from groups b) to e).

12. An agent as claimed in Claim 11, characterised in that it contains at least three different polymers of formula (I) of which the average degrees of polymerisation $\bar{P}_1$ differ by at least 20 %, based on the value for $\bar{P}_1$ of the polymer having the lower molecular weight.

13. An agent as claimed in one or more of Claims 1 to 12, characterised in that the polymer(s) corresponding to formula (I) is/are present in a quantity of at least 40, preferably at least 60 and, more preferably, at least 80 % by weight, based on the total quantity of polymers.

14. An agent as claimed in one or more of Claims 1 to 13, characterised in that, in addition to polymers of formula (I), it contains polymers of formula (II).

15. An agent as claimed in one or more of Claims 1 to 14, characterised in that it contains polymers of formula (IV).

16. A process for concentrating by evaporation sugar juices containing additives for preventing the formation of hard crusts, characterised in that the agent claimed in Claims 1 to 15 is added to the sugar juices.

17. The use of the agent claimed in Claims 1 to 15 for preventing the formation of hard crusts in the concentration of sugar juices by evaporation.

## Revendications

1. Produit pour empêcher les formations d'incrustations de tartre à l'évaporation des jus sucrés, caractérisé en ce qu'il contient un mélange d'au moins 3 polymères du groupe

a) des polymères et/ou sels de formule I

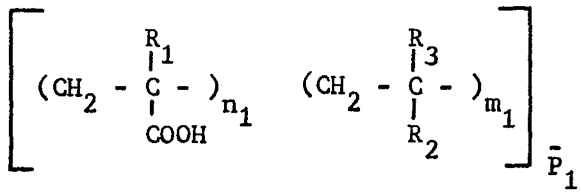

(I)

dans laquelle

$R_1$ = —H, —OH, —$CH_3$, —$CH_2OH$ et/ou —Cl

$R_2$ = —CHO, —$CH_2OH$ et/ou —$COOCH_2CH_2COOH$

$R_3$ = —H, —$CH_3$ et/ou —$CH_2OH$

$n_1$ : 0,5 à 0,95

$m_1$ : 0,05 à 0,5

$n_1 + m_1 = 1$

$\bar{P}_1$ : 6 à 300

b) des polymères et/ou sels de formule I différant des polymères définis ci-dessus sous a) d'au moins 20 % par le degré de polymérisation moyen $\bar{P}_1$, par rapport à la valeur de $\bar{P}_1$ pour le polymère présentant le degré de polymérisation moyen le plus bas,

c) des polymères et/ou sels et/ou esters alkyliques inférieurs de formule II

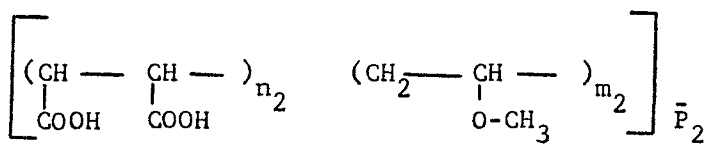

(II)

dans laquelle

$n_2$ : 0,4 à 1,0

$m_2$ : 0 à 0,6

$n_2 + m_2 = 1$

$\bar{P}_2$ : 5 à 4 000

d) des polymères et/ou sels de formule III

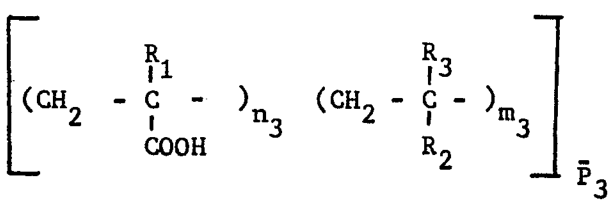

(III)

dans laquelle

$n_3$ : 0,95 à 1

$m_3$ : 0,05 à 0

$n_3 + m_3 = 1$

$\bar{P}_3$ : 6 à 300

$R_1$, $R_2$ et $R_3$ ayant les mêmes significations que dans la formule I,

e) des polyacrylamides anioniques et/ou sels de formule IV

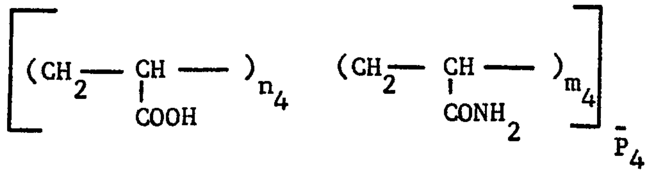

(IV)

dans laquelle

$n_4$ : 0,05 à 0,95

$m_4$ : 0,95 à 0,05

$n_4 + m_4 = 1$

$\bar{P}_4$ : 10 à 500

l'un au moins de ces polymères étant présent en quantité d'au moins 10 % en poids et au moins deux de ces polymères en quantité d'au moins 5 % en poids chacun, par rapport à la quantité totale des polymères.

2. Produit selon la revendication 1, caractérisé en ce que, dans la formule I, les symboles ci-après ont les significations suivantes :

$R_1$ : —H et/ou —$CH_2OH$

$R_2$ : —CHO, —$CH_2OH$ et/ou —$COOCH_2CH_2COOH$

$R_3$ : —H et/ou —$CH_2OH$

3. Produit selon la revendication 2, caractérisé en ce que, dans la formule I, les symboles ci-après ont les significations suivantes :

$R_1$ : —H

$R_2$ : —CHO et/ou —$COOCH_2CH_2COOH$

$R_3$ : —H

4. Produit selon l'une des revendications 1 à 3, caractérisé en ce que, dans la formule I, les symboles ci-après ont les significations suivantes :

$n_1$ : 0,6 à 0,95

$m_1$ : 0,05 à 0,4

5. Produit selon la revendication 4, caractérisé en ce que, dans la formule I, les symboles ont les significations suivantes :

$n_1$ : 0,7 à 0,95

$m_1$ : 0,05 à 0,3.

6. Produit selon une ou plusieurs des revendications 1 à 5, caractérisé en ce que le symbole $\bar{P}_1$ a une valeur de 10 à 200.

7. Produit selon la revendication 6, caractérisé en ce que le symbole $\bar{P}_1$ a une valeur de 15 à 150.

8. Produit selon une ou plusieurs des revendications 1 à 6, caractérisé en ce que le symbole $\bar{P}_2$ a une valeur de 6 à 3 200, plus spécialement de 100 à 3 200.

9. Produit selon une ou plusieurs des revendications 1 à 8, caractérisé en ce que le symbole $\bar{P}_3$ a une valeur de 7 à 200, plus spécialement de 10 à 200.

10. Produit selon une ou plusieurs des revendications 1 à 9, caractérisé en ce que le symbole $\bar{P}_4$ a une valeur de 10 à 100, de préférence de 20 à 80.

11. Produit selon une ou plusieurs des revendications 1 à 10, caractérisé en ce qu'il contient au moins 2 polymères de formule I dont les degrés de polymérisation diffèrent d'au moins 20 %, par rapport au degré de polymérisation moyen $\bar{P}_1$ du polymère au degré de polymérisation le plus bas, et au moins un autre polymère des groupes b) à e).

12. Produit selon la revendication 11, caractérisé en ce qu'il contient au moins 3 polymères différents de formule I dont les degrés de polymérisation moyens $\bar{P}_1$ diffèrent d'au moins 20 %, par rapport à la valeur de $\bar{P}_1$ pour le polymère dont le poids moléculaire est respectivement plus bas.

13. Produit selon une ou plusieurs des revendications 1 à 12, caractérisé en ce que le ou les polymères de formule I sont présents en quantité d'au moins 40, de préférence d'au moins 60 et mieux encore d'au moins 80 % en poids par rapport à la quantité totale des polymères.

14. Produit selon une ou plusieurs des revendications 1 à 13, caractérisé en ce que, avec des polymères de formule I, il contient des polymères de formule II.

15. Produit selon une ou plusieurs des revendications 1 à 14, caractérisé en ce qu'il contient des polymères de formule IV.

16. Procédé pour évaporer des jus sucrés contenant des additifs servant à empêcher les formations d'incrustations de tartre, caractérisé en ce que l'on ajoute aux jus sucrés le produit selon les revendications 1 à 15.

17. Utilisation du produit selon les revendications 1 à 15 pour empêcher les formations d'incrustations de tartre à l'évaporation des jus sucrés.